# EUROPÄISCHE PATENTANMELDUNG

(11) **EP 3 971 011 A1**
(43) Veröffentlichungstag der Anmeldung: **23.03.2022**
(21) Anmeldenummer: 21196400.2
(22) Anmeldetag: 13.09.2021
(51) Int. Cl.: B60L 3/00

(54) **LADESTATION UND LADEINSTALLATIONSANORDNUNG**

(30) Priorität: 16.09.2020 DE 202020105314 U
(71) Anmelder: H + E Produktentwicklung GmbH, 01468 Moritzburg (DE)
(72) Erfinder: Bobe, Mirko, 01109 Dresden (DE); Grütze, Matthias, 01689 Niederau/OT Gröbern (DE)
(74) Vertreter: Kaufmann, Sigfrid

(57) **Zusammenfassung**

Die Erfindung betrifft eine Ladestation sowie eine Ladeinstallationsanordnung für elektrisch betriebene Zwei- und Dreiradfahrzeuge, welche kostengünstig und ohne technischen Aufwand mit praktisch jedem herstellerspezifischen Ladekabelstecker bzw. Ladegerät (8) bereitgestellt werden können, wobei das Ladekabel bei Nichtbenutzung der Ladestation stets aufgeräumt sein soll. Die Ladestation umfasst ein Gehäuse (1), ein Steckelement (2) sowie eine flexible Energiezuleitung (5), wobei das Gehäuse (1) als Hohlraumprofil ausgebildet ist, das ein beweglich auf einer Gleitführung (7) angeordnetes, mit der flexiblen Energiezuleitung (5) verbundenes Ladegerät (8) beinhaltet. Die Ladestation bzw. die Ladeinstallationsanordnung eignen sich insbesondere zum Laden von Elektrofahrrädern, Elektrorollern, E-Boards und ähnlichen elektrisch angetriebenen oder elektrisch antriebsunterstützten Zweiradfahrzeugen, aber auch von Dreiradfahrzeugen, wie z. B. Cargobikes.

## Beschreibung

Die Erfindung betrifft eine Ladestation für elektrisch betriebene Zwei- und Dreiradfahrzeuge, insbesondere von Elektrofahrrädern, Elektrorollern, E-Boards und ähnlichen elektrisch angetriebenen oder elektrisch antriebsunterstützten Zweiradfahrzeugen, aber auch von Dreiradfahrzeugen, wie z. B. Cargobikes. Außerdem betrifft die Erfindung eine Ladeinstallationsanordnung.

Ladestationen für Elektrofahrräder werden in zunehmendem Maße im öffentlichen Raum sowie in der privaten Garage oder auf einem Firmengelände installiert. Mithilfe der Ladestation wird elektrische Energie aus einem Versorgungsnetz bedarfsgerecht in einen Energiespeicher der elektrisch betreibbaren Zwei- und Dreiradfahrzeuge eingespeist.

Das Problem insbesondere bei Elektrofahrrädern ist, dass jeder Hersteller ein spezifisches, nicht mit anderen Systemen kompatibles Ladesystem verwendet. Somit sind die Ladegeräte bzw. die Ladekabelstecker zum Anschluss an den Akku des Fahrzeugs zwischen unterschiedlichen Herstellermarken nicht kompatibel. Zusätzlich bilden Ladegerät, Kabel und Stecker eine untrennbare Einheit, die einen Austausch nur des Ladekabelsteckers nicht erlauben.

In EP 3 035 478 B1 ist eine Ladestation zum Bereitstellen elektrischer Energie für ein elektrisch betreibbares Fahrzeug beschrieben. Ein mit dem Gehäusekörper der Ladestation verbundenes Ladekabel weist an seinem freien Ende einen Stecker zum Anschluss an das Elektrofahrzeug auf. Nachteilig an diesem Design ist, dass das Ladekabel eine vorgegebene Länge aufweist und im Nichtgebrauchszustand frei herumhängt, wodurch es eine Unfallquelle darstellen kann.

Nachteile der bekannten Ladestationen für Zweiräder sind vor allem aber die Notwendigkeit, für jede herstellerspezifische Lösung eine dedizierte Ladestation anzubieten, was nicht zuletzt einen erhöhten Kostenaufwand nach sich zieht.

Es ist daher Aufgabe der vorliegenden Erfindung, eine Ladestation anzugeben, welche kostengünstig und ohne technischen Aufwand mit praktisch jedem herstellerspezifischen Ladekabelstecker bzw. Ladegerät bereitgestellt werden kann, wobei das Ladekabel bei Nichtbenutzung der Ladestation stets aufgeräumt sein soll. Darüber hinaus ist es Aufgabe der vorliegenden Erfindung, eine die Ladestation aufweisende Ladeinstallationsanordnung anzugeben.

Diese Aufgabe wird durch eine Ladestation mit den kennzeichnenden Merkmalen nach dem Anspruch 1 gelöst; zweckmäßige Weiterbildungen der Erfindung sind in den Ansprüchen 2 bis 9 aufgeführt. Eine Ladeinstallationsanordnung wird in den Ansprüchen 10 und 11 aufgezeigt.

Nach Maßgabe der Offenbarung ist die Ladestation für Zwei- und Dreiradfahrzeuge auf Basis des vom Elektrofahrzeughersteller bereitgestellten Ladegeräts inklusive dessen Kabel und herstellerspezifischen Ladestecker aufgebaut.

Im Folgenden wird der Ladestecker "Steckelement" und das Kabel "flexible Energiezuleitung" genannt. Die Einheit aus Steckelement mit (fest) verbundener flexibler Energiezuleitung ist gemeinhin auch unter der Bezeichnung "Ladekabel" bekannt.

Die Ladestation umfasst das Steckelement zum Herstellen einer Ladeverbindung mit dem Fahrzeug und eine mit dem Steckelement verbundene flexible Energiezuleitung.

Die Ladestation umfasst weiterhin ein durch Höhe, Breite und Tiefe gekennzeichnetes, langgestrecktes, schmales Gehäuse, das ein Hohlraumprofil mit einer Stirnwand und einer dieser gegenüberliegenden Rückwand ist. Beide, Stirnwand und Rückwand, sind senkrecht zur Längsebene des Gehäuses angeordnet, wobei die Tiefe als der Abstand zwischen Stirnwand und Rückwand definiert ist. Vorzugsweise beträgt die Höhe des kastenförmigen Gehäuses wenigstens das Doppelte seiner größten Tiefe.

Erfindungsgemäß ist die Stirnwand in einem Winkel zu der gegenüberliegenden Rückwand angeordnet, wobei die Tiefe des Gehäuses im Bodenbereich geringer als im oberen Bereich ist, d. h., die Stirnwand "kippt nach vorne". Hierbei beträgt der Verkippwinkel der Stirnwand zur Rückwand, und somit (im bestimmungsgemäß aufgestellten Zustand der Ladestation) zur Lotrechten, maximal 30°, bevorzugt zwischen 10° und 20°.

Die Stirnwand des Gehäuses weist in ihrem (im bestimmungsgemäßen Gebrauch der Ladestation) oberen Bereich eine Öffnung auf, durch welche die flexible Energiezuleitung geführt ist. Hierbei ist der Querschnitt der Öffnung größer als der Durchmesser der flexiblen Energiezuleitung, sodass die flexible Energiezuleitung mit nur geringem Kraftaufwand durch die Öffnung bewegt werden kann. Mithin ist das mit der flexiblen Energiezuleitung verbundene Steckelement von außerhalb des Gehäuses zugänglich.

Des Weiteren ist im Inneren des Gehäuses an seiner Stirnwand eine Gleitführung, ausgeführt als oben offenes Kastenprofil, angeordnet. Auf dieser Gleitführung ist das zu dem herstellerspezifischen Ladekabel zugehörige Ladegerät beweglich gelagert. Hierbei ist die Gleitführung den Außenabmessungen und Form des Ladegeräts angepasst, sodass das Ladegerät mit nur geringem Kraftaufwand in der Gleitführung zwangsgeführt auf und ab gleiten kann.

Vorteile der erfindungsgemäßen Ladestation sind - infolge ihres Aufbaus, insbesondere der schräg geneigten Stirnwand - das quasi automatisiert erfolgende Einziehen der flexiblen Energiezuleitung in das Gehäuse nach erfolgtem Ladevorgang, sodass z. B. Stolperfallen durch herumliegende Kabel vermieden sind. Durch die Ausgestaltung der Ladestation erfordert eine Anpassung derselben an unterschiedliche Ladeteile keine oder nur geringe bauliche Abstimmungen der Gleitführung.

Hinzu kommt die aufgrund nur weniger notwendiger Bauteile kostengünstige Herstellung der Ladestation.

Der platzsparende Aufbau erlaubt eine Aufstellung auch an räumlich beengten Aufstellungsorten. Zudem erleichtert das in Armhöhe heraushängende Steckelement das Herausziehen des Ladekabels und Anschließen an das Elektrofahrzeug.

Die Ladestation kann an ihrer Rückwand an einer Wand befestigt oder mittels eines im unteren Bereich der Ladestation anzubringenden Fußelementes im Raum aufgestellt werden.

Die äußeren Abmessungen betragen vorzugsweise 1200 mm in der Höhe, 100 mm in der Breite und 420 mm in der Tiefe. Insbesondere jedoch beträgt die Höhe des plattenförmigen Gehäuses wenigstens das Doppelte seiner Tiefe.

Um ein vollständiges Einziehen der flexiblen Energiezuleitung in das Gehäuse zu gewährleisten, kann die Höhe des Gehäuses größer oder gleich der Länge der flexiblen Energiezuleitung sein.

Auf der Rückwand der Ladestation kann ein Netzanschluss vorgesehen sein, der über eine flexible Elektroleitung mit dem Ladegerät verbunden ist.

Ferner kann die Ladestation eine Überstromschutzeinrichtung aufweisen, die eingerichtet ist, bei einem Stromfluss von mehr als 16 A abzuschalten.

An oder hinter der Öffnung des Gehäuses kann zur Verbesserung der Gleiteigenschaft der flexiblen Energiezuleitung ein reibungsreduzierendes Element, insbesondere eine Umlenkrolle, angeordnet sein, über welche die flexible Energiezuleitung geführt ist.

Gemäß einer Ausgestaltung weist die Ladestation eine Ladeanzeige auf, die den Ladevorgang und/oder eine vollständige Aufladung des zum Laden angeschlossenen Akkus signalisiert.

Eine derartige Ladeanzeige kann in Form einer LED-Leuchte ausgeführt sein, die während des Ladevorganges beispielsweise rot leuchtet. Ist der Ladevorgang abgeschlossen, erlischt die LED oder ändert ihre Farbe, z. B. auf grün.

Weiter kann vorgesehen werden, dass der Querschnitt der Öffnung in der Stirnwand des Gehäuses kleiner als der Querschnitt des Steckelements ist, um ein unbeabsichtigtes Hineinziehen des Steckelements in das Gehäuse zu vermeiden. Alternativ kann an der flexiblen Energiezuleitung im Bereich des Steckelements ein Stoppelement, z. B. in Form einer Verdickung, an- oder aufgebracht sein, wobei der Durchmesser des Stoppelements größer als der Durchmesser der Öffnung im Gehäuse ist. Das Stoppelement ist z. B. ein über die Energiezuleitung geschobener, auf dieser fest aufsitzender Gummiring.

Gemäß einer Ausgestaltung der Ladestation weist diese eine oder mehrere zur Flächenwerbung ausgebildete Werbevorrichtungen auf. Insbesondere sind die Werbevorrichtungen Plakathalter zur Halterung von von Hand auswechselbaren Plakaten oder elektronische Anzeigetafeln, die über den Netzanschluss mit elektrischer Energie versorgt werden. Diese Werbevorrichtungen ermöglichen es, die Aufwendungen für die Ladestation durch Werbung zumindest teilweise zu refinanzieren. Die Werbevorrichtungen können auch schwenkbar ausgeführt sein, um die Werbeanzeige blickgünstig auszurichten.

Eine Ausgestaltung sieht vor, die Seitenwände des Gehäuses zumindest partiell transparent auszuführen. Sie können zum Beispiel aus oder zumindest im Wesentlichen aus einem Polymethylmethacrylat-Werkstoff (Acrylglas) bestehen. Insbesondere kann eine im Inneren des Gehäuses angeordnete, farbig leuchtende LED-Leiste vorgesehen sein, die z. B. während des Ladevorganges ein wechselndes Farblichtspiel erzeugt.

Zusätzlich kann die Ladestation gesichert sein; vorzugsweise weist sie jeweils eine berührungsfrei aktivierbare Nutzungssperre auf. Die Ladefreigabe und ggf. die Nutzungsabrechnung für den Stromverbrauch erfolgt hierbei z. B. via RFID-Karte oder via Mobiltelefon.

Gemäß der Offenbarung wird außerdem eine Ladeinstallationsanordnung bereitgestellt. Diese Ladeinstallationsanordnung umfasst wenigstens zwei, vorzugsweise jedoch vier, der zuvor beschriebenen Ladestationen. Die Ladestationen werden hierbei nebeneinander angeordnet, wobei sich benachbarte Ladestationen mit ihren Seitenwänden berühren, sodass optisch ein einheitlicher Block gebildet ist.

Vorzugsweise ist hierbei in jeder der z. B. vier Ladestationen ein anderes herstellerspezifisches Ladekabel mit zugehörigem Ladegerät integriert, sodass in diesem Fall die Ladeinstallationsanordnung eine Auswahl der vier gebräuchlichsten Ladekabel bietet.

Die Erfindung ist nachfolgend anhand eines Ausführungsbeispiels und mit Bezug auf die schematischen Zeichnungen näher erläutert. Dazu zeigen maßstabsgetreu in schematischer Darstellung die
Fig. 1: eine Ausgestaltung der Ladestation in Perspektivansicht;
Fig. 2: dieselbe Ausgestaltung der Ladestation im Längsschnitt; und
Fig. 3: eine Ladeinstallationsanordnung in Perspektivansicht;

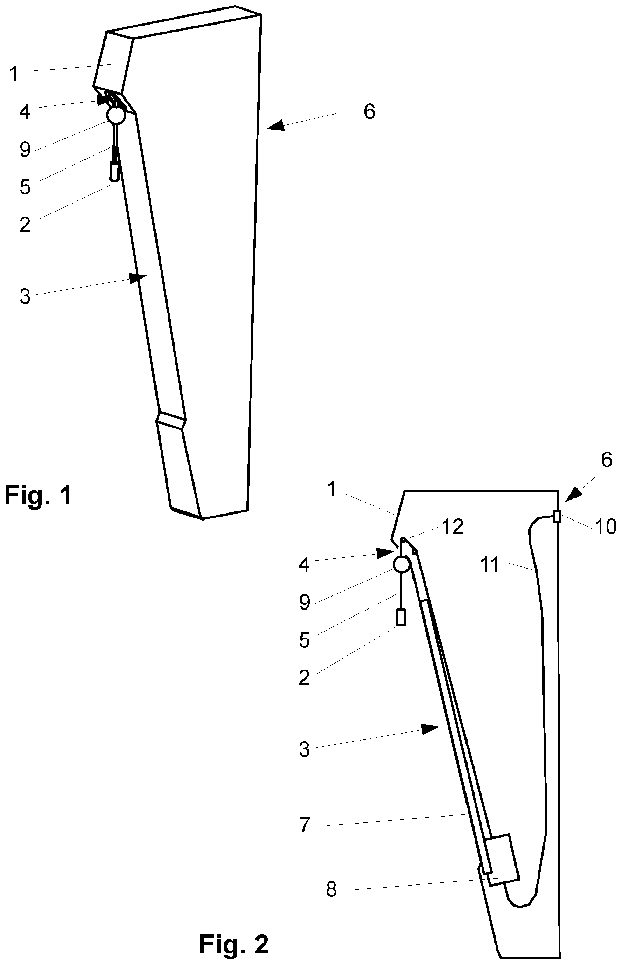

Die Ladestation gemäß der Figur 1 weist an der Stirnwand 3 des Gehäuses 1 die Öffnung 4 auf, durch welche die flexible Energiezuleitung 5 aus dem Gehäuse 1 herausgeführt ist. Am Ende der flexiblen Energiezuleitung 5 befindet sich das Steckelement 2, welches für einen Ladevorgang in den zu ladenden Akku (nicht dargestellt) gesteckt werden muss.

Die Stirnwand 3 ist gegenüber der Rückwand 6 - und somit (im bestimmungsgemäß aufgestellten Zustand der Ladestation) bezüglich der Lotrechten - um etwa 15 ° geneigt.

An der flexiblen Energiezuleitung 5 ist das Stoppelement 9 angebracht.

Im in Fig. 2 dargestellten Längsschnitt der Ladestation gemäß Fig. 1 ist der Aufbau im Inneren des Gehäuses 1 zu sehen. Die fest mit dem Ladegerät 8 verbundene flexible Energiezuleitung 5 ist über das reibungsreduzierende Um lenkelement 12 durch die Öffnung 4 des Gehäuses 1 aus demselben heraus geführt. Das Ladegerät 8 kann - mittels Zug an der flexiblen Energiezuleitung 5 - von der Gleitführung 7 geführt nach oben bewegt werden. Das Ladegerät 8 ist über die flexible Elektroleitung 11 mit dem an der Rückwand 6 des Gehäuses 1 angeordneten Netzanschluss 10 verbunden.

Zum Laden von Elektrofahrädern, Elektrorollern, E-Boards o. dgl. wird das Ladekabel soweit wie nötig aus dem Gehäuse 1 herausgezogen. Nach dem Ende des Ladevorganges und dem Trennen des Steckelements 2 vom Akku (nicht dargestellt) wird die flexiblen Energiezuleitung 5 aufgrund des Gewichts des Ladegeräts 8 in das Gehäuse 1 zurückgezogen. Das Stoppelement 9 verhindert hierbei, dass das Steckelement 2 im Gehäuse 1 verschwindet.

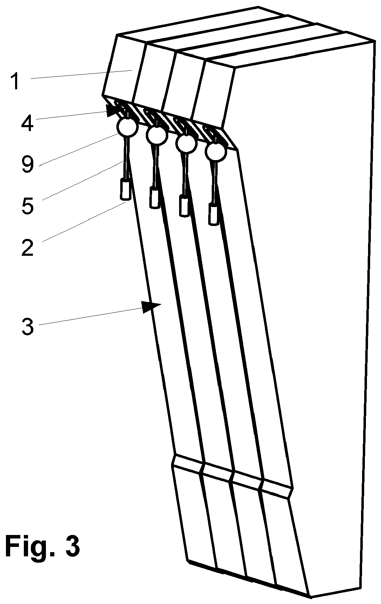

Fig. 3 zeigt in Perspektivansicht eine Ladeinstallationsanordnung, die vier Ladestationen gemäß Fig. 1 umfasst.

### Liste der verwendeten Bezugszeichen

- 1: Gehäuse
- 2: Steckelement
- 3: Stirnwand
- 4: Öffnung
- 5: flexible Energiezuleitung
- 6: Rückwand
- 7: Gleitführung
- 8: Ladegerät
- 9: Stoppelement
- 10: Netzanschluss
- 11: Elektroleitung
- 12: Umlenkelement

## Patentansprüche

1. Ladestation zum Bereitstellen elektrischer Energie für elektrisch betreibbare Zweioder Dreiradfahrzeuge, umfassend ein Gehäuse (1), wenigstens ein von außerhalb des Gehäuses (1) zugängliches Steckelement (2) zum Herstellen einer Ladeverbindung mit dem Fahrzeug und eine mit dem Steckelement (2) verbundene flexible Energiezuleitung (5),
**dadurch gekennzeichnet, dass**
- das Gehäuse (1) als Hohlraumprofil ausgebildet ist;
- die mit dem Steckelement (2) verbundene flexible Energiezuleitung (5) an einer Stirnwand (3) durch eine Öffnung (4) in das Gehäuse (1) geführt ist, wobei der Querschnitt der Öffnung (4) größer als der Durchmesser der flexiblen Energiezuleitung (5) ist;
- die Stirnwand (3) in einem Winkel zu der dieser gegenüberliegenden Rückwand (6) angeordnet ist, wodurch die Tiefe des Gehäuses (1) im Bodenbereich geringer als im oberen Bereich ist;
- im Inneren des Gehäuses (1) an seiner Stirnwand (3) eine Gleitführung (7) angeordnet ist; und
- die flexible Energiezuleitung (5) mit einem beweglich auf der Gleitführung (7) gelagerten Ladegerät (8) verbunden ist.

2. Ladestation nach Anspruch 1, **dadurch gekennzeichnet, dass** die Höhe des Gehäuses (1) wenigstens das Doppelte seiner Tiefe beträgt.

3. Ladestation nach Anspruch 1 oder 2, **dadurch gekennzeichnet, dass** die Länge der flexiblen Energiezuleitung (5) kleiner oder gleich der Höhe des Gehäuses (1) ist.

4. Ladestation nach einem der Ansprüche 1 bis 3, **dadurch gekennzeichnet, dass** sie auf ihrer Rückwand (6) einen Netzanschluss (10) aufweist, der über eine flexible Elektroleitung (11) mit dem Ladegerät (8) verbunden ist.

5. Ladestation nach einem der Ansprüche 1 bis 4, **dadurch gekennzeichnet, dass** sie eine Überstromschutzeinrichtung aufweist, die eingerichtet ist, bei einem Stromfluss von mehr als 16 A abzuschalten.

6. Ladestation nach einem der Ansprüche 1 bis 5, **dadurch gekennzeichnet, dass** die flexible Energiezuleitung (5) an der Öffnung (4) über ein Umlenkelement (12) geführt ist.

7. Ladestation nach einem der Ansprüche 1 bis 6, **dadurch gekennzeichnet, dass** sie eine Ladeanzeige aufweist.

8. Ladestation nach Anspruch 7, **dadurch gekennzeichnet, dass** die Ladeanzeige eine LED-Leuchte ist.

9. Ladestation nach einem der Ansprüche 1 bis 8, **dadurch gekennzeichnet, dass** der Durchmesser des Steckelements (2) größer als der Durchmesser der Öffnung (4) ist oder die flexible Energiezuleitung (5) im Bereich des Steckelements (2) ein Stoppelement (9) aufweist, dessen Durchmesser größer als der Durchmesser der Öffnung (4) ist.

10. Ladeinstallationsanordnung, umfassend wenigstens zwei Ladestationen nach einem der Ansprüche 1 bis 9, wobei die Ladestationen mit jeweils einer Seitenwand berührend angeordnet sind.

11. Ladeinstallationsanordnung nach Anspruch 10, **dadurch gekennzeichnet, dass** die einzelnen Ladestationen jeweils unterschiedliche Steckelemente (2) aufweisen.
- Es folgen 2 Seiten Zeichnungen -
